Europäisches Patentamt

European Patent Office

Office européen des brevets

(19)

(11) Publication number: **0 198 124**
A1

## (12) EUROPEAN PATENT APPLICATION

(21) Application number: 85200575.0

(22) Date of filing: 16.04.85

(51) Int. Cl.⁴: **G 03 B 27/58**, G 03 C 3/00,
B 65 D 85/672

(43) Date of publication of application: **22.10.86**
**Bulletin 86/43**

(84) Designated Contracting States: **BE DE FR GB**

(71) Applicant: **AGFA-GEVAERT naamloze vennootschap,**
**Septestraat 27, B-2510 Mortsel (BE)**

(72) Inventor: **Buelens, Edward, Duffelsesteenweg 178,**
**B-2550 Kontich (BE)**

(54) **Light-tight cassette.**

(57) A light-tight cassette with a roll (11) of web-like light-sensitive photographic material wound on a rotatable core (16), which has incorporated spring means (54) for rotatably biasing the core (16) prior to the first use of the cassette thereby to keep the photographic material well tightened, and means (55) operable from the outside of the cassette to release the spring means (54) in view of the normal withdrawal of the material from the cassette.

DESCRIPTION

The present invention relates to a light-tight cassette for holding a roll of web-like light-sensitive photographic material wound around a core and for dispensing the said photographic material through a slit provided in said cassette.

The invention is generally useful in all cassettes of the type used in apparatus to be fed with web-like photographic material and is particularly advantageous in cassettes intended to be used in apparatus for microfilm and phototype-setting purposes.

Cassettes for holding a roll of light-sensitive material are known that are in the form of an elongated square-shaped box in which the roll of photographic material is rotatably supported and that has in its peripheral wall an elongate exit slit through which the photographic material can be pulled out.

A problem with the mentioned cassettes is the unrolling or the clock-springing of the roll of photographic material wound on the core during the transfer and storage of the cassette. An important cause for the undesirable unrolling of the material is the after-drying of the photographic layer(s) of the material whereby shrinking of the layer(s) occurs. An unrolled roll of material is usually characterized by some tens of the outer windings of the roll that have become slackened whereby they may easily move with respect to each other. Further an unrolled roll sometimes presents different subsections that are themselves tight but that are separated from each other by a few windings only that occupy a space up to one millimeter in some cases, and in such space these windings can freely rub over each other.

One cause for the damaging of the moving windings of the photographic material is formed by the presence of dust and the like in the cassette that causes scratching of the light-sensitive layer. Another cause for defects is the so-called pressure-desensitization. The problem is aggravated by the fact that the defects are noticed only after the exposure and the processing of the complete roll of material, so that spoiled images have to be re-exposed on a new roll of material whereby the uninterrupted succession of images is lost. In the automatic exposure and processing of the material, defect parts in the film can simply not be accepted.

The problem may be approached from the side of emulsion technology according to which photographic layers may be made, and more in particular according to which types of gelatin may be used, that offer an improved resistance against mechanical attack. However it has been shown that light-sensitive layers that are improved in this respect, may show less good photographic properties.

It has also been tried to use higher winding tensions in the winding of the rolls thereby to reduce the tendency of the roll windings to move relatively to each other. This measure has but a very limited effect, since the higher winding force may cause damaging of the material on its turn.

Further it is known to lock the core of a film roll in a cassette against rotation, and to seal the end winding of the roll against unwinding, in order to prevent unrolling of the material. However, this technique is not effective in avoiding the consequences resulting from shrinking of the photographic layers after the roll has been wound.

It is the object of the present invention to provide an improved light-tight cassette for a roll of web-like light-sensitive photographic material that prevents unrolling of the wound material.

According to the present invention, a light-tight cassette suited for holding a roll of web-like light-sensitive photographic material wound on a core and for dispensing the said photographic material through a light-tight slit provided in said cassette, wherein the said cassette is in the form of a box comprising a shell and end closure walls having means for rotatably supporting a said roll within said box, and wherein the leading end of the photographic material extends through the slit and is sealed against withdrawal into the cassette, is characterized in that the said cassette is provided with spring means that co-operates with the core and is releasably attached to an end wall for rotatably biasing the core, thereby to keep the roll of photographic material tightened prior to the first use of the cassette.

In operation of the cassette, the operator releases the spring means prior to the first use of the cassette so that the roll of material is free to unwind at a pulling force that is only dependent on the friction of the rotatable core bearing and on the web material in the dispenser slit of the cassette.

The spring means will be capable of rotating the core over a

GV.1367

substantial angle during the period of time comprised between the date of manufacturing of the cassette and that of its first use. As a minimum angle of rotation should be considered an angle of approximately 180 angular degrees, but greater angles up to 270 degrees and more may be considered as well.

According to a suitable embodiment of the invention, the releasable co-operation between the spring means and an end wall occurs through the intermediary of a key, e.g. in the form of a nail-like member, that extends through a corresponding bore in the end wall of the cassette, and that fits onto a matching eyelet of the spring means. A preferred form on the spring means is a spiral or helical spring, for instance in the form of a stainless steel wire.

The invention will be described hereinafter by way of example with reference to the accompanying drawings wherein :

Fig. 1 is en exploded view of one embodiment of a cassette according to the present invention,

Fig. 2 is a longitudinal sectional view, illustrating the co-operation of the core, the end wall and the spring means,

Figs. 3a to 3c are a plan view, resp. two lateral views shifted over 90 degrees, of the spring used in the cassette according to Figs. 1 and 2,

Fig. 4 is a perspective view of the cassette according to Figs. 1 and 2, and

Fig. 5 is a detail of the fold of the film sealed by a first sealing tape.

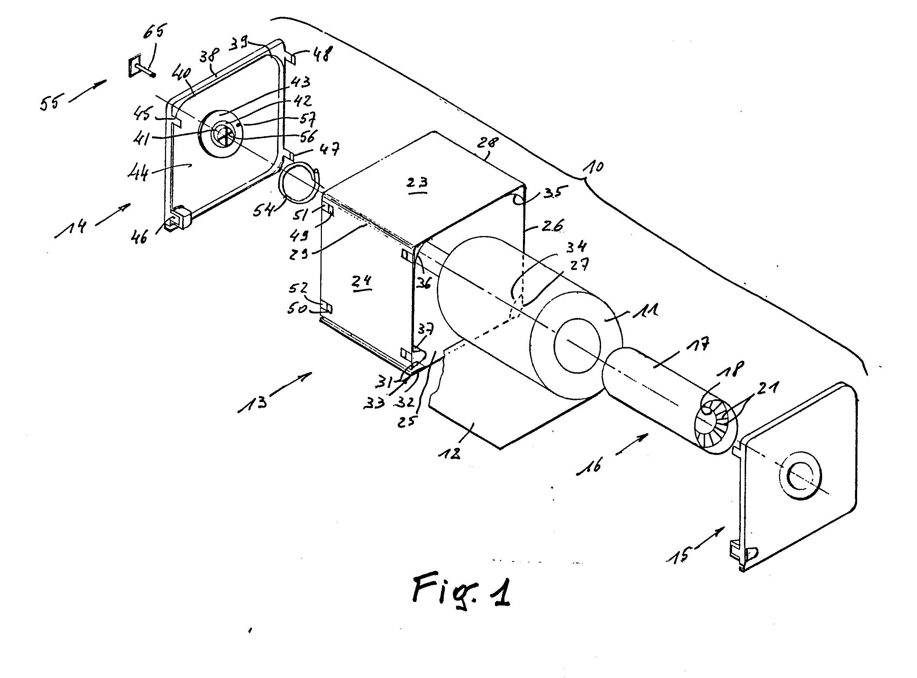

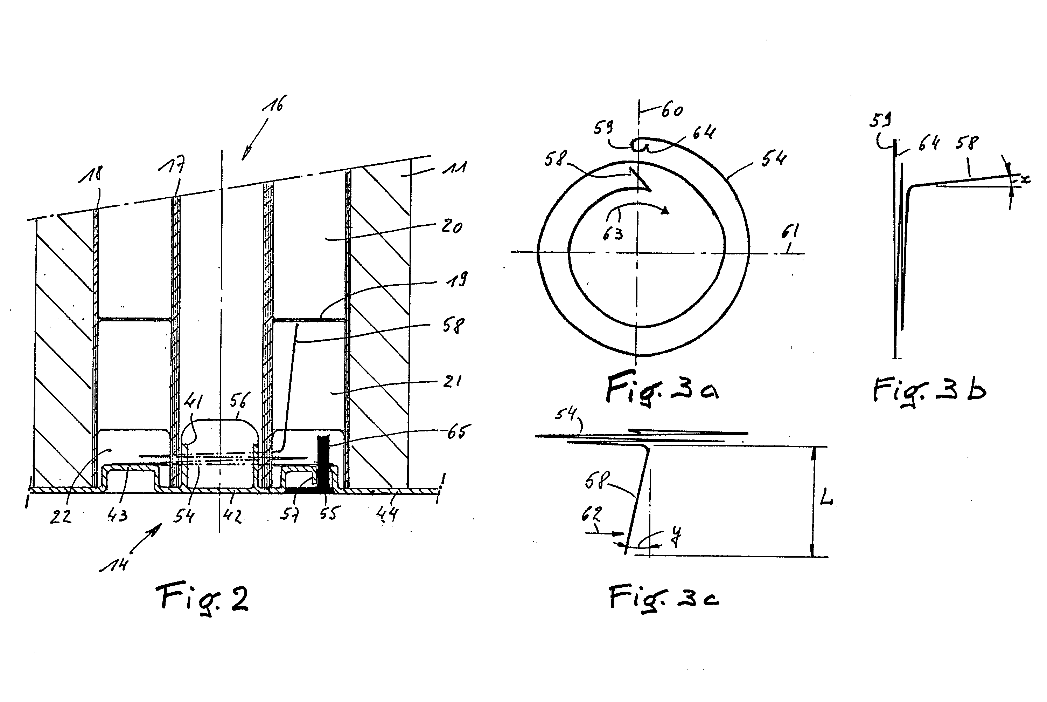

Referring to fig. 1, a cassette generally designated by numeral 10 for holding a roll 11 of light-sensitive film 12 comprises a shell portion 13 and two end closure walls 14 and 15. The film 12 is wound on a core 16, in the present case made from injection molded plastic, that consists of two concentric tubes 17 and 18 interconnected by a central partition 19 and a plurality of radially extending wings 20 and 21 (see also Fig. 2).

The free ends of the wings 20 and 21 remain somewhat remote from the corresponding ends of the core, so that annular chambers, such as the chamber 22 designated in Fig. 2, are formed. The shell 13 and the end closure walls 14 and 15 are as well preferably made of plastics material and may be formed by injection moulding.

GV.1367

The shell 13 comprises four substantially flat walls 23 to 26 joined in substantially rectangular relationship by three successive rounded corner portions 27, 28 and 29. Two wall portions 31 and 32 define an exit slit 33 for the film over the complete length of the shell through which the film can be withdrawn from the roll 11. The slot walls 31 and 32 are lined with strips of resilient material (not illustrated) such as velvet, felt or the like that ensure the light-tightness of the slit. The corner portions 27, 28 and 29 are provided at the innerside of the shell with double wall portions 34, 35 and 36 that form integral parts of said shell.

A fourth double wall portion 37 with an approximately trapezoid cross-section is provided near the wall portion 31. The hollow spaces formed between the mentioned double wall portions and the shell itself extend over the entire length of the shell.

Each end closure wall has closely spaced inner and outer peripheral wall portions, 38 and 39 respectively, as illustrated for the wall 14, that define a peripheral groove 40 for receiving the corresponding end rim of the shell 14. Each end wall has a cylindrical hub portion 41 that projects from a wall section 42. The wall section 42 lies in the plane of the wall 44 and is joined therewith through an annular wall section 43. Each end closure wall is finally provided with four resilient tongues 45 to 48 showing hook-like end portions, that are in fact extensions of the outer peripheral wall portion 38.

The shell 13 is provided with square holes, such as 49 and 50 in regions that are doubled by an inner wall portion, and said openings come in register with the tongues of an end wall when such end wall is pressed against the corresponding open end of the shell. The inwardly projecting faces of the tongues are tapered to provide inclined cam faces so that, when an end wall is pushed into position on the shell, the tongues first bear against the rim of the shell and then become deflected outwardly so as to slide along the slightly recessed wall portions, such as 51 and 52, until the hook-like end portions of each of said tongues move into registration with the corresponding holes and thereupon spring into said holes under the elastic recovery forces of said tongues whereby a snap-locking engagement between the end walls and the shell is obtained.

The fitting of the marginal ends of the shell portion into the corresponding grooves of the end walls, and the wall portions 34 through 37 that double the corner sections of the shell that have the openings for the snap fitting of the end walls, ensure the light-tightness of the closed cassette.

The snap-fitting of the end walls to the shell ensures a reliable connection of the end walls, but if desired such fitting may be doubled by, or replaced by known techniques such as stapling, nailing, adhesive bonding, etc.

The technique of fitting the end walls as described hereinbefore is disclosed in full detail in the co-pending EO application 83 20 1748.7 filed on Dec. 12, 1983 and entitled "Light-tight cassette".

The exploded view of Fig. 1 finally shows a spiral spring 54 and a locking key 55 in the form of a nail-like member, the function of which is described in detail hereinafter with reference to Fig. 2.

As may be seen in Fig. 2, the core 16 is rotatably supported with its inner tube 17 on the hub 41 of the end closure wall 14. The hub 41 is a short hollow tube that is provided with cross-like inner stiffening member 56 that slightly extends beyond the tube and has rounded corner portions for forming in some way a guidance for the easy location of the core on the hub during the assembling of the cassette.

The annular wall portion 43 forms, together with the annular chamber 22 in the core, an effective lock against light penetration into the cassette through the small circular opening 57 into which fits the key 55.

The rotatable springbiasing of the core occurs by means of the spring 54, see also Figs. 3a to 3c. In the present example the spring is a spiral spring of stainless steel spring wire with approximately two turns, that has also a slightly telescoping form, see Figs. 3b and 3c. The outer end of the spring has a eyelet 59 that is arranged for engagement by the locking key 55, and the inner end of the spring has a leg 58 that projects approximately axially of the spring, and that fits between two adjacent wings 21 of the core. The length L of the leg 58 is such that the spring becomes slightly axially compressed as the core is placed over the hub 41, by the abutment of the leg 58 against the partition 19. The leg 58 makes an angle $x$ with respect to the axis of the spring, considered in a plane 60 that passes through the axis of the spring and the eyelet, see Fig. 3b, and an angle $y$ with respect to said same axis, considered in a plane 61 that is normal to the plane 60, see Fig. 3c.

GV.1367

The purpose of the angle x is to ensure that the top of the leg 58
extends somewhat outwardly so that at the mounting of the core on the end
closure wall there is no risk that the leg would enter the central core
opening, instead of penetrating into a compartment between two wings.
The purpose of the leading angle y is to prevent that the leg 58 would be
folded backwardly, as said leg is becoming biased in the direction
illustrated by the arrow 62 in Fig. 3c, as the leg 58 is being moved in
the direction of the arrow 63, see Fig. 3a, by rotation of the core.

The shape of the eyelet 59 is such that the extremity 64 of the
eyelet extends slightly above the plane of the outer turn of the spring,
in the direction towards the next turn of the spring, as shown in
Fig. 3b. The purpose of this feature is to prevent that said eyelet
extremity 64, if it would even neglectably be deflected towards the
opposite side, would scratch over the inner surface of the end wall as
the spring is rotated with the core at the withdrawal of film from the
cassette.

The operation of the inventive spring means will become more clear
from the description hereinafter of the mounting of a roll of film in the
cassette in the manufacturing process under darkroom conditions.

The trailing end of the roll of film is fastened to the core in any
known way. The most simple fastening is obtained by firm by tightening
the first windings on the core by hand so that rotation of the core
causes the further winding of the film on the core. The leading end of
the roll of film preferably is also fastened to the roll at some
distance, for intance 11 to 20 cm, from the leading edge of said end.
Said fastening may occur in a known way by the provision of a strip of
pressure-sensitive tape over a hole in the last winding of the roll, the
adhesive adhering through the hole to the last but one winding of the
roll.

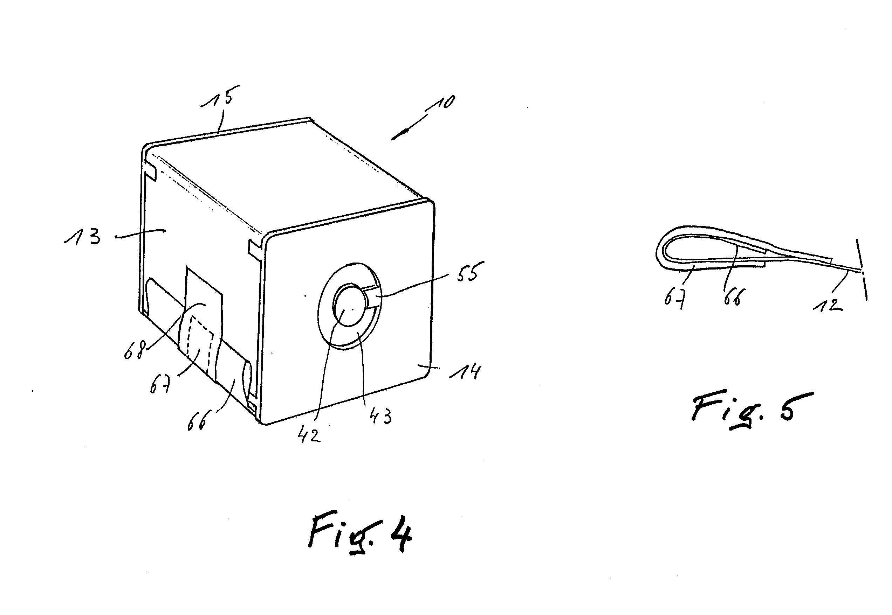

Referring to Fig. 1, the operator inserts a key 55 in the hole 57 of
the end wall 14, and then puts this wall on the working disk, the hub 41
facing upwardly. The head of the key tightly fits between the central
wall section 42 and the outer portion of the wall 14, see Fig. 4. The
spring 54 is positioned over the hub, and the eyelet is tight-fittingly
slid on the shank 65 of the key 55.

The operator then places a roll 11 of film wound on a core 16
vertically over the hub 41. Some attention is required to ensure that

GV.1367

the leg 58 of the spring properly fits into a compartment of the core between two wings and is not swung about the shank 65 so that it would no longer be within the annular chamber 22 of the core.

The operator then takes the shell and axially lowers it over the roll, while taking care to properly pass the leading film end through the exit slit of the shell, and to properly orient the shell so that it correctly engages the peripheral groove 40 in the end wall 14. Thereafter the end wall 15 is put into place. The end walls are self-locking in the present example so that no further fixing work is needed.

The operator now pulls a prescribed length of film from the cassette whereby the core is made to perform a rotation over an angle that is considered appropriate for establishing a film tension that is capable of rotating the core as the film windings would get loose in the period between the loading of the cassette and the first use of the cassette. Suitable angles of rotation of the core during the assembling of the cassette are between 180 and 270 angular degrees, but larger angles may be considered as well. During the described pulling step, the film area with the sealing tape has been withdrawn from the cassette. The operator forms a fold 66 in the film end that extends from the exit slit, cuts the remaining film end (including the temporary sealing area with the sealing tape) from the folded area, and attaches a first sealing tape 67 to the film in order to fix the fold (see Fig. 5). In this way he excludes any possibility for the fold to unfold and move back occasionally into the cassette. Then the operator attaches the folded film end 66 onto the cassette shell with a second sealing tape 68, that is struck over the first one, see Fig. 4.

When the cassette is used for the first time, the operator first pulls out the key 55 whereby the eyelet 59 of the spring becomes disengaged and the spring is instantly released. The operator then cuts the sealing tape 67 and pulls out a length of film that is suitable for the threading of the film into the printing or exposure apparatus wherein the cassette is to be used. During said first withdrawing of the film, and also during the further withdrawal of film under darkroom conditions in the exposure apparatus, the spring 54 rotates together with the core, and slides with the outer winding and the eyelet 59 over the innerside surface of the wall section 43. The friction caused thereby is

GV.1367

neglectable as compared with the friction caused by the lips of the dispenser slit on the film, and the friction of the core on the hubs 41 at both ends of the core.

The removal of the key 55 from the bore 57 does not destroy the light-tightness of the cassette, since the wall of the outer tube 18 of the core forms together with the innerly situated co-operating wall of the annular wall section 43, an effective light-lock.

The following example illustrates a cassette in accordance with the described embodiment.

Film roll : microfilm on a polyester base with a thickness of 170 μm

        length of film : 200 ft width of film : 105 mm

Length of the core : 103 mm

Outer diameter of the core : 80 mm

Inner diameter of the core : 26 mm

Tensioning spring : outer diameter 70 mm inner diameter 50 mm

        2 turns

        angle $\underline{x}$ : between 5 and 8 degrees

        angle $\underline{y}$ : between 10 and 15 degrees wire thickness : 1.5 mm

Tensioning angle of the core as the cassette is loaded : 270 degrees.

Film tension at said angle : 10 N

Film tension during the winding of the film on the core : 30 N.

Normal withdrawal force for the film from the cassette : 5 N.

The cassette was transported during 20 Hrs by truck in various road circumstances. The film was then exposed and processed and the film was free of any of the defects mentioned hereinbefore. The same cassettes wherein no spring means were provided and wherein the last film winding was attached to the last winding but one by a sealing strip as described hereinbefore, were transported together with the improved cassette and it was shown that the films of these cassettes became unsuited for use.

According to a further test, cassettes with and without the novel spring means were kept during 24 Hrs at -15°C, and then kept during 1 Hr at 20°C. Immediately thereafter the cassettes were subjected during 6 minutes to a test simulating vibration that is typical for transport and handling of the cassettes, and it was shown that the loss of film

GV.1367

9

tension of the cassettes without spring means was so important that the material was unsuited for its intended use. On the contrary, the cassettes that were provided with the inventive spring means showed no unacceptable defects.

The core rotations that could be measured after this test were situated between 5 and 10 angular degrees for the described 200 ft cassette.

It will be understood that a cassette according to the invention is not limited to the described embodiment.

A sealing strip may be provided over the sealing key to guarantee that the key has not inadvertently be removed and then replaced, thereby eliminating the effect of the spring.

The spring may have other forms such as a helical or a torsion spring incorporated in the core.

The core of the cassette may be designed by driving engagement with a drive shaft in the exposure apparatus, so that after exposure the film may be rewound into the cassette, the film end being properly attached to the core in such case.

The cassette may be designed for easy reloading by a customer or by a private distributor.

The film may be fastened to the core by adhesive means, by a pressure-sensitive tape, by engagement with an appropriately shaped slit or hook in the core, etc.

The core may be provided with a layer of an elastic polymer, e.g. foamed polyurethane, in order to compensate shrinkage of the core at low temperatures, and thereby to prevent the getting free of the core from the film.

The cassette may have any suitable form, e.g. a prism, cube, parallelepipedon, cylinder, and advantageously its end walls substantially correspond in shape with the cross section of its shell.

The cassette may be made from different materials, e.g. the end walls may be made of plastic or metal, the shell may be of cardboard or fibreboard, the core of plastic, aluminium, etc. The locking key may have other shapes, and may also be designed for release of the spring by rotation of the key rather than by removal thereof.

GV.1367

10

CLAIMS

1. A light-tight cassette suited for holding a roll of web-like light-sensitive photographic material wound on a core and for dispensing the said photographic material through a light-tight slit provided in said cassette, wherein the said cassette is in the form of a box comprising a shell and end closure walls having means for rotatably supporting a said roll within said box, and wherein the leading end of the photographic material extends through the slit and is sealed against withdrawal into the cassette, characterized in that the said cassette (10) is provided with spring means (54) that co-operates with the core (16) and is releasably attached to an end wall (14) for rotatably biasing the core, thereby to keep the roll (11) of photographic material (12) tightened prior to the first use of the cassette.

2. A light-tight cassette according to claim 1, wherein the spring means (54) has an end portion (59) that co-operates with a key (55) that is operable from the outside of the corresponding end wall of the cassette.

3. A light-tight cassette according to claim 1, wherein the key (55) can be withdrawn from the end wall thereby to liberate the spring means.

4. A light-tight cassette according to claims 1, 2 or 3, wherein the spring means is in the form of a spiral spring (54).

5. A light-tight cassette according to claim 4, wherein the spring means is a wire spring (54).

6. A light-tight cassette according to any of claims 1 to 5, wherein the end of the spring means (54) that co-operates with the core (16) has an angle end portion (58) that fits generally axially into a corresponding cavity of the core (16).

7. A light-tight cassette according to any of claims 1 to 6, wherein the core (16) has an annular chamber (22) at one end for the accomodation of the spring.

8. A light-tight cassette according to claim 3, wherein said key is a nail-like member (55) the head of which lies approximately flush with the outer surface of the cassette end wall (14).

9. A light-tight cassette according to any of claims 2 to 8 hereinbefore, wherein the leading end of the roll (11) of light-sensitive material (12) has a folded portion (66) thereby to exclude accidental

GV.1367

withdrawal of said end into the cassette, prior to the removal of the locking key for the spring means.

Fig. 1

0198124

Fig. 3b

Fig. 3a

Fig. 3c

Fig. 2

Fig. 4

Fig. 5

European Patent
Office

**EUROPEAN SEARCH REPORT**

0198124

Application number

EP 85 20 0575

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-1 928 106 (H.F. KOCH et al.)<br>* Claim 1 * | 1 | G 03 B 27/58<br>G 03 C 3/00<br>B 65 D 85/672 |
| A | EP-A-0 053 856 (AGFA-GEVAERT)<br>* Claim 1 * | 1 | |

TECHNICAL FIELDS
SEARCHED (Int. Cl.4)

G 03 B 27/00
G 03 C 3/00
B 65 D 85/00
G 03 B 17/00

The present search report has been drawn up for all claims

| Place of search | Date of completion of the search | Examiner |
|---|---|---|
| THE HAGUE | 17-12-1985 | RASSCHAERT A. |